(19) Europäisches Patentamt
European Patent Office
Office européen des brevets

(11) **EP 4 583 592 A1**

(12) **EUROPEAN PATENT APPLICATION**
published in accordance with Art. 153(4) EPC

(43) Date of publication:
**09.07.2025 Bulletin 2025/28**

(21) Application number: **22956900.9**

(22) Date of filing: **31.08.2022**

(51) International Patent Classification (IPC):
**H04W 52/08** (2009.01)   **H04W 52/58** (2009.01)
**H04L 27/00** (2006.01)

(52) Cooperative Patent Classification (CPC):
**H04L 27/00; H04W 52/08; H04W 52/58**

(86) International application number:
**PCT/CN2022/116318**

(87) International publication number:
**WO 2024/045074 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LUO, Xingyi**
**Beijing 100085 (CN)**

(74) Representative: **Dehns Germany Partnerschaft mbB**
**Theresienstraße 6-8**
**80333 München (DE)**

(54) **CLOSED-LOOP POWER ADJUSTMENT VALUE DETERMINATION METHOD AND APPARATUS, AND DEVICE AND STORAGE MEDIUM**

(57) The present application relates to the field of mobile communications. Disclosed are a closed-loop power adjustment value determination method and apparatus, and a device and a storage medium. The method comprises: a terminal receiving transmit power control (TPC) commands sent by a network device, wherein the TPC commands are used for configuring, for the terminal, closed-loop power adjustment values of a plurality of transmission reception points (TRPs), and the closed-loop power adjustment value corresponding to the TPC command corresponding to each TRP is used for determining an uplink transmit power corresponding to the transmission from the terminal to the TRP. In the solution provided in the embodiments of the present application, a terminal can determine a closed-loop power adjustment value corresponding to each TRP according to a TPC command, and then the terminal performs dynamic transmit power adjustment on the basis of the closed-loop power adjustment value corresponding to each TRP and the actual condition of the transmission from the terminal to each TRP, so as to ensure that the terminal performs uplink transmission at a relatively large sending power while ensuring that interference is reduced, to ensure the throughput of a system.

step 301, the network device sends TPC commands to the terminal, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP

step 302, the terminal receives the TPC commands sent by the network device

FIG. 3

**Description**

TECHNICAL FIELD

The disclosure relates to the field of mobile communication, in particular to a method for determining a closed-loop power adjustment value, an apparatus for determining a closed-loop power adjustment value, a device and a storage medium.

BACKGROUND

In a mobile communication system, a network device can communicate with a terminal, and the network device can also configure a power control parameter for the terminal, so that the terminal can control a power based on the configured power control parameter.

In detail, the power control parameter configured by the network device for the terminal includes an open-loop power control parameter and a closed-loop power control parameter, and the power control parameter corresponding to each time field position may be different, so the terminal may accumulate the open-loop power control parameters and the closed-loop power control parameters within a certain period of time, and then control the power based on an obtained transmit power.

However, currently, a scheme that enables the terminal to transmit data with a plurality of transmission reception points (TRPs) configured by the network device by using a plurality of panels has been proposed, but how to determine the transmit power corresponding to each TRP according to the closed-loop power control parameter of the TRP becomes a problem to be solved urgently.

SUMMARY

The embodiments of the disclosure provides a method for determining a closed-loop power adjustment value, an apparatus for determining a closed-loop power adjustment value, a device and a storage medium. The terminal dynamically adjusts a transmit power based on a closed-loop power adjustment value corresponding to each transmission reception point (TRP) and an actual situation of the terminal to each TRP, so as to ensure that the terminal performs uplink transmission with a larger transmit power on the premise of reducing interference, thereby ensuring system throughput. The technical scheme is provided as follows.

According to a first aspect of the disclosure, a method for determining a closed-loop power adjustment value is provided. The method is provided by a terminal, and includes:
receiving transmit power control (TPC) commands sent by a network device, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP.

According to a second aspect of the disclosure, a method for determining a closed-loop power adjustment value is provided. The method is provided by a network device, and includes:
sending TPC commands to a terminal, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP.

According to a third aspect of the disclosure, an apparatus for determining a closed-loop power adjustment value is provided. The apparatus includes:
a receiving module, configured to receive TPC commands sent by a network device, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP.

According to a fourth aspect of the disclosure, an apparatus for determining a closed-loop power adjustment value is provided. The apparatus includes:
a sending module, configured to send TPC commands to a terminal, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP.

According to a fifth aspect of the disclosure, a terminal is provided. The terminal includes: a processor, a transceiver connected to the processor, and a memory for storing instructions executable by the processor. The processor is configured to load and execute executable instructions to implement the method for determining the closed-loop power adjustment value as described above.

According to a sixth aspect of the disclosure, a network device is provided. The network device includes: a processor, a transceiver connected to the processor, and a memory for storing instructions executable by the processor. The processor is configured to load and execute executable instructions to implement the method for determining the closed-loop power adjustment value as described above.

According to a seventh aspect of the disclosure, a communication system is provided. The communication system includes a terminal and a network device. The terminal is configured to implement the method for determining the closed-loop power adjustment value described in the first aspect, and the network device is configured to implement the method for determining the closed-loop power adjustment value described in the second aspect.

According to an eighth aspect of the disclosure, a computer-readable storage medium is provided. The readable storage medium stores an executable program code, and the executable program code is loaded and executed by a processor to implement the method for determining the closed-loop power adjustment value as described above.

According to a ninth aspect of the disclosure, a chip is provided. The chip includes a programmable logic circuit and/or a program instruction. When the chip runs on a terminal or a network device, the method for determining the closed-loop power adjustment value as described above may be implemented.

According to a tenth aspect of the disclosure, a computer program product is provided. When the computer program product is executed by a processor of a terminal or a network device, the method for determining the closed-loop power adjustment value as described above may be implemented.

In the scheme provided by the embodiment of the disclosure, the terminal may determine the closed-loop power adjustment value corresponding to each TRP according to the TPC commands, and then dynamically adjusts the transmit power based on the closed-loop power adjustment value corresponding to each TRP and the actual situation of the terminal to each TRP, so as to ensure that the terminal performs uplink transmission with a larger transmit power on the premise of reducing interference, thereby ensuring the system throughput.

## BRIEF DESCRIPTION OF THE DRAWINGS

In order to more clearly illustrate the technical solutions in the embodiments of the disclosure, the drawings required for use in the description of the embodiments will be briefly introduced below. Obviously, the drawings described below are only some embodiments of the disclosure. For those skilled in this field, other drawings may be obtained based on these drawings without inventive work.

FIG. 1 is a block diagram of a communication system according to an exemplary embodiment of the disclosure.
FIG. 2 is a block diagram of another communication system according to an exemplary embodiment of the disclosure.
FIG. 3 is a flowchart of a method for determining a closed-loop power adjustment value according to an exemplary embodiment of the disclosure.
FIG. 4 is a schematic diagram of uplink transmission according to an exemplary embodiment of the disclosure.
FIG. 5 is a flowchart of a method for configuring a closed-loop power index according to an exemplary embodiment of the disclosure.

FIG. 6 is a flowchart of a method for reconfiguring a closed-loop power adjustment value according to an exemplary embodiment of the disclosure.
FIG. 7 is a flowchart of a method for determining a closed-loop power adjustment value according to an exemplary embodiment of the disclosure.
FIG. 8 is a flowchart of a method for determining a closed-loop power adjustment value according to an exemplary embodiment of the disclosure.
FIG. 9 is a block diagram of an apparatus for determining a closed-loop power adjustment value according to an exemplary embodiment of the disclosure.
FIG. 10 is a block diagram of an apparatus for determining a closed-loop power adjustment value according to an exemplary embodiment of the disclosure.
FIG. 11 is a schematic diagram of a communication device according to an exemplary embodiment of the disclosure.

## DETAILED DESCRIPTION

In order to make the purpose, technical solutions and advantages of this disclosure more clear, the embodiments of the disclosure will be further described in detail in combination with the attached drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the embodiments of the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

It should be noted that information (including but not limited to user equipment information, user personal information, etc.), data (including but not limited to data for analysis, stored data, displayed data, etc.) and signals involved in this disclosure are all authorized by users or fully authorized by all parties, and collection, use and processing of relevant data need to comply with relevant laws, regulations and standards of relevant countries and regions.

Firstly, the application scenario of this disclosure is explained.

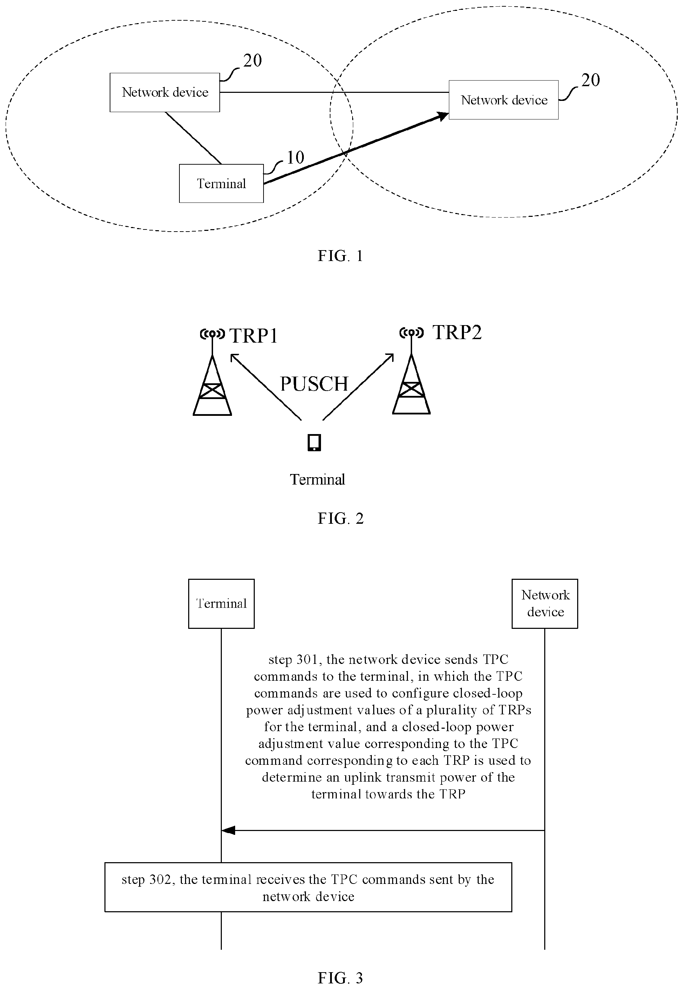

FIG. 1 is a block diagram of a communication system according to an exemplary embodiment of the disclosure. The communication system may include a terminal 10 and a network device 20.

There are usually a plurality of terminals 10, and one or more of the terminals 10 are distributed in the cell managed by each network device 20. The terminal 10 may include various handheld devices with wireless communication functions, vehicle-mounted devices, wearable devices, computing devices or other processing devices connected to a wireless modem, as well as various types of user equipment (UE) or mobile station (MS) and the like. For convenience of description, in the embodiment of the disclosure, the above-mentioned devices are collectively referred to as a terminal.

The network device 20 is a device deployed in an access network to provide wireless communication functions for the terminal 10. For convenience of description, in the embodiment of the disclosure, the above-mentioned devices providing wireless communication functions for the terminal 10 are collectively referred to as a network device. By establishing a connection between the network device 20 and the terminal 10 through a wireless interface, the network device 20 and the terminal 10 may communicate with each other through the connection, including exchanging signaling and data. There may be a plurality of network devices 20, and two adjacent network devices 20 may communicate with each other via wired or wireless means. The terminal 10 may send beam reports to different network devices 20, i.e., establishing the connection between different network devices 20.

The network device 20 may include various forms of macro base stations, micro base stations, relay stations, access points, and the like. In systems adopting different radio access technologies, the name of device with network device functions may be different. For example, in a 5G new radio (NR) system, it is called gNodeB or gNB. As communication technology evolves, the name "network device" may change.

Optionally, the network device 20 is provided with at least two transmission reception points (TRPs). Alternatively, at least one TRP is provided on each of at least two network devices 20. That is, at least two network devices 20 are provided with at least two TRPs. The at least two TRPs may come from the same cell or different cells.

In some embodiments, the network device 20 is provided with 4 TRPs, through which the network device 2 may provide services to the terminal 10, so the terminal may perform data transmission based on the 4 TRPs.

For example, when the network device 20 is provided with 2 TRPs, namely TRP1 and TRP2, as shown in FIG. 2, the two TRPs may transmit data in a time-division transmission mode, in which the time-division transmission mode means that at a certain moment, the terminal transmits uplink data to the TRP1, and at another moment, the terminal transmits uplink data to the TRP2.

Currently, a scheme is proposed to support the terminal to transmit uplink data to a plurality of TRPs at the same time, that is, the terminal may transmit uplink data to the TRP1 at the same time, and may transmit uplink data to the TRP2 at this time.

In detail, when the terminal transmits uplink data to the TRP, the terminal determines an uplink transmit power based on an open-loop power control parameter and a closed-loop power control parameter, so as to transmit uplink data to each TRP according to the determined uplink transmit power.

For example, taking the power control of a physical uplink shared channel (PUSCH) as an example, how to determine the transmit power of the PUSCH is explained. The transmit power of the PUSCH is determined by the following equation:

$$P = min\{P_{CMAX}, P_0 + \alpha * PL + f(l) + \Delta\}$$

where $f(l)$ represents a power control adjustment state value, which is also called a closed-loop power control parameter, and the value of $f(l)$ maybe $f(l) = \delta(l)$ or $f(l, t) = f(i - i_0, l) + \Sigma \delta$, how to calculate $f(l)$ is indicated by a high-level parameter, where $\delta$ represents a value indicated by downlink control information (DCI) through a transmit power control (TPC) field. $l$ is called a closed-loop index, and i is a time and is used to represent the current moment. $P_{CMAX}$ represents the maximum transmit power allowed by the terminal, and $P_0$ represents a target reception power, which is an expected reception power configured by the network device. $\alpha$ represents a partial path compensation factor, $PL$ represents a path loss, and $\Delta$ represents other adjustment quantities.

The "5G NR system" in the embodiment of the disclosure may also be called 5G system or NR system, which is understood by those skilled in the art. The technical scheme described in the embodiment of the disclosure may be applied to the 5G NR system or future evolved systems of the 5G NR system.

FIG. 3 is a flowchart of a method for determining a closed-loop power adjustment value according to an exemplary embodiment of the disclosure. For example, the method may be applied to the terminal and the network device in FIG. 1. The method includes at least part of the following contents.

At step 301, the network device sends TPC commands to the terminal, in which the TPC commands are used to configure closed-loop power adjustment values of a plurality of TRPs for the terminal, and a closed-loop power adjustment value corresponding to the TPC command corresponding to each TRP is used to determine an uplink transmit power from the terminal to the TRP.

At step 302, the terminal receives the TPC commands sent by the network device.

In the embodiment of the disclosure, the terminal may perform uplink data transmission through the TRPs configured by the network device. For the terminal, the terminal may transmit uplink data to the network device at the same time. Moreover, for the terminal, the terminal needs to determine the closed-loop power adjustment value corresponding to each TRP, and then transmits the uplink data based on the determined uplink transmit power corresponding to each TRP.

In some embodiments, the method for determining the uplink transmit power according to the closed-loop power adjustment value may be referred to the method for determining the transmit power in the above embodiment.

The network device may configure closed-loop power adjustment values of a plurality of TRPs for the terminal through the TPC commands. After receiving the TPC commands, the terminal may determine the closed-loop power adjustment value of each TRP, and then determine the uplink transmit power from the terminal to the TRP based on the closed-loop power adjustment value corresponding to the TPC command corresponding to the TRP, so that the terminal may send the uplink data to the network device based on the uplink transmit power corresponding to each TRP.

It should be noted that the steps performed by the terminal in the embodiment of the disclosure may constitute a new independent embodiment, and the steps performed by the network device may constitute a new independent embodiment, which is not limited in the embodiment of the disclosure.

In the scheme provided by the embodiment of the disclosure, the terminal may determine the closed-loop power adjustment value corresponding to each TRP according to the TPC commands, and then dynamically adjust the transmit power based on the closed-loop power adjustment value corresponding to each TRP and an actual situation of the terminal to each TRP, so as to ensure that the terminal performs uplink transmission with a larger transmit power on the premise of reducing interference, thereby ensuring system throughput.

The embodiment shown in FIG. 3 explains that the terminal needs to determine the closed-loop power adjustment value of each TRP. How the terminal determines the closed-loop power adjustment value of each TRP according to the TPC command will be explained below.

In some embodiments, the closed-loop power adjustment value of each TRP is accumulated by the closed-loop power adjustment values indicated by the TPC commands corresponding to the TRP.

In the embodiment of the disclosure, the terminal needs to determine the closed-loop power adjustment value of each TRP, the closed-loop power adjustment value of each TRP is obtained by accumulating the closed-loop power adjustment values corresponding to the terminal at a plurality of moments. That is, the terminal needs to accumulate the closed-loop power adjustment values indicated by the TPC commands corresponding to each TRP to obtain the closed-loop power adjustment value of each TRP at the current moment.

Optionally, $f(i, l, t) = f(i - i_0, l, t) + \Sigma \delta$, where $t$ represents an identifier of the TRP, $\delta$ represents the closed-loop power adjustment value indicated by the TPC command, and i is the time and is used to represent the current moment. $f(i, l, t)$ represents the closed-loop power adjustment value of each TRP obtained by accumulation.

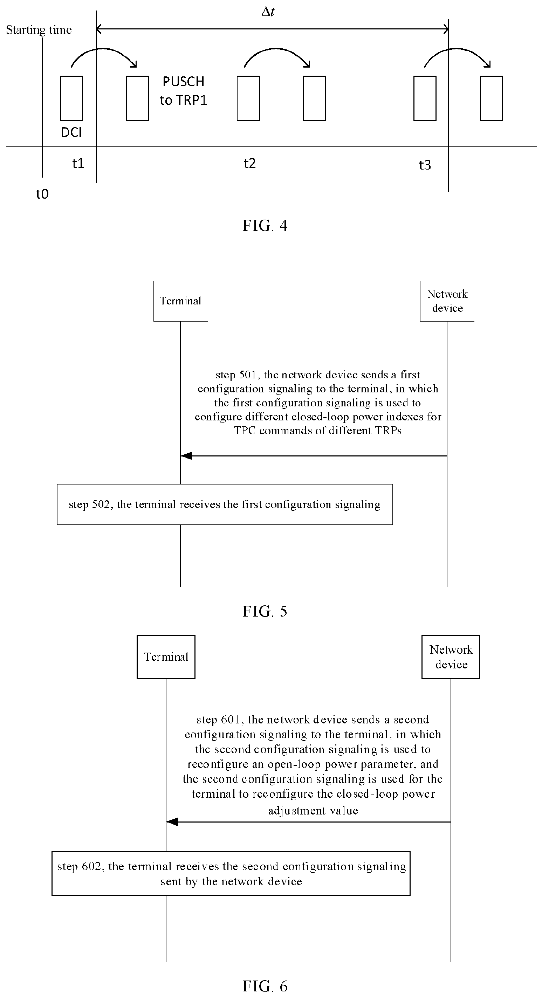

For example, as shown in FIG. 4, the terminal may accumulate the closed-loop power adjustment values indicated by all TPC commands, within the $\Delta t$, belonging to the same closed loop process, to obtain the accumulated closed-loop power adjustment value of each TRP.

In some embodiments, the TPC commands of the plurality of TRPs are carried in DCI. How the terminal determines the TRPs according to the TPC commands will be described below.

In the embodiment of the disclosure, when the TPC command sent by the network device to the terminal is carried in the DCI, the terminal may determine the TRP corresponding to the TPC command according to the TPC command in the DCI, and then determine the closed-loop power adjustment value of each TRP.

Optionally, the TPC command may be carried in one or more pieces of DCI. For the terminal, the way to determine the TRP according to the one or more pieces of DCI may also be different, which will be described below.

In the first way, at least two TPC commands are carried in one piece of DCI.

In some embodiments, in a case where at least two TPC commands are carried in one piece of DCI, there are default mapping relationships between positions of TPC fields included in the DCI and the TRPs, and the TRPs are determined based on the positions of TPC fields included in the DCI and the default mapping relationships.

In the embodiment of the disclosure, the network device indicates the closed-loop power adjustment values of the plurality of TRPs for the terminal by sending one piece of DCI to the terminal. After receiving the DCI, the terminal may determine the TRPs corresponding to the TPC commands according to the DCI.

The DCI includes a plurality of TPC fields, and the default mapping relationship of the terminal includes a corresponding relationship between the TPC field and the TRP, so the terminal may determine the corresponding TRP according to the position of TPC field and the default mapping relationship.

That is, after receiving the DCI, the terminal may determine the TRP corresponding to each TPC field according to the positions of TPC fields included in the DCI and the default mapping relationships, and then determine the closed-loop power adjustment value of each TRP based on the determined closed-loop power adjustment values indicated by the TPC commands corresponding to the same TRP.

For example, the Nth TPC field in the DCI corresponds to the Nth TRP, and N is a positive integer. That is, when the DCI includes two TPC fields, the first TPC field corresponds to the first TRP, and the second TPC field corresponds to the second TRP.

Optionally, the mapping relationship between the TPC field and the TRP is actually indicated by a transmission configuration indication (TCI) state, in which the TCI state has a corresponding relationship with the TRP. That is, the position of TPC field included in the DCI indicates the corresponding TRP through the corresponding TCI state.

For example, the Nth TPC field corresponds to the Nth TCI state, and the Nth TCI state corresponds to the Nth TRP, that is, the Nth TPC field corresponds to the Nth TRP.

In other embodiments, in a case where at least two TPC commands are carried in one piece of DCI, the DCI includes a mapping identifier, and the mapping identifier indicates mapping relationships between positions of TPC fields and the TRPs, and the TRPs are determined based on the positions of TPC fields included in the DCI and the mapping relationships indicated by the mapping identifier.

In the embodiment of the disclosure, the network device indicates the closed-loop power adjustment values of the plurality of TRPs for the terminal by sending a piece of DCI, so that after receiving the DCI, the terminal may determine the TRPs corresponding to the TPC commands according to the DCI.

The DCI includes the mapping identifier, which is used to indicate the mapping relationships between the positions of TPC fields and the TRPs. In other words, the terminal is notified of the mapping relationships between the positions of TPC fields and the TRPs through the mapping identifier, so that the terminal may determine the corresponding TRP according to the position of the TPC field.

In some embodiments, the mapping identifier indicates a sequential mapping, in which the sequential mapping means that the Nth TPC field corresponds to the Nth TRP, and N is a positive integer. That is, when the DCI includes two TPC fields, the first TPC field corresponds to the first TRP, and the second TPC field corresponds to the second TRP.

Optionally, the mapping relationship between the TPC field and the TRP is actually indicated by a TCI state, in which the TCI state has a corresponding relationship with the TRP. That is, the position of the TPC field included in the DCI indicates the corresponding TRP through the corresponding TCI state.

For example, the Nth TPC field corresponds to the Nth TCI state, and the TCI state corresponds to the TRP. That is, the Nth TPC field corresponds to the Nth TRP.

In some embodiments, the mapping identifier indicates a cross mapping, in which the cross mapping means that the first TPC field corresponds to the second TRP, while the second TPC field corresponds to the first TRP.

Optionally, the mapping relationship between the TPC field and the TRP is actually indicated by a TCI state, in which the TCI state has a corresponding relationship with the TRP. That is, the position of the TPC field included in the DCI indicates the corresponding TRP through the corresponding TCI state.

For example, the first TPC field corresponds to the second TCI state, and the second TCI state corresponds to the second TRP. The second TPC field corresponds to the first TCI state, and the first TCI state corresponds to the first TRP.

In the second way, in a case where a plurality of TPC commands are carried in a plurality of pieces of DCI, the TRPs are determined based on an indication identifier included in each DCI. That is, one TPC command is carried in one piece of DCI.

In the embodiment of the disclosure, the indication identifier indicates the TRP, that is, each TPC command corresponds to one TRP, and the terminal determines the TRP corresponding to each DCI according to the indication identifier included in the DCI.

Optionally, the indication identifier may be a control resource set pool index (CORESETPoolIndex), or other identifiers, which is not limited by the embodiment of the disclosure.

In the scheme provided by the embodiment of the disclosure, the TPC command is carried in the DCI, and the terminal may determine the corresponding TRP according to the TPC field included in the DCI, and then determine the closed-loop power adjustment value corresponding to each TRP, which thus ensures an accuracy of the determined closed-loop power adjustment value, thereby improving a reliability of transmission.

In some embodiments, the terminal may also perform the accumulation of closed-loop power adjustment values according to a closed-loop power index associated with the TPC command.

The closed-loop power indexes associated with TPC commands of different TRPs may be different. That is, the TPC commands of each TRP are associated with the same closed-loop power index, and the terminal may determine whether it is the same TRP according to the closed-loop power index associated with the TPC command. In a case where the closed-loop power indexes associated with the TPC commands are the same, it is determined that the TPC commands correspond to the same TRP.

Optionally, the network device may configure the closed-loop power index for the TPC command of the terminal. FIG. 5 is a flowchart of a method for configuring a closed-loop power index according to an exemplary embodiment of the disclosure. For example, the method may be applied to the terminal and the network device shown in FIG. 1. The method includes at least part of the following contents.

At step 501, the network device sends a first configuration signaling to the terminal, in which the first configuration signaling is used to configure different closed-loop power indexes for TPC commands of different TRPs.

At step 502, the terminal receives the first configuration signaling.

In the embodiment of the disclosure, the network device may configure the closed-loop power indexes of the TPC commands of different TRPs through the first configuration signaling. After receiving the first configuration signaling sent by the network device, the terminal may determine the closed-loop power index of the TPC command of each TRP. When the terminal needs to determine the closed-loop power adjustment value of each TRP, the corresponding TRP may be determined according to the closed-loop power index, and then the closed-loop power adjustment value of each TRP may be determined.

In some embodiments, the first configuration signaling is used to configure an association relationship between the closed-loop power index and the TCI state.

In the embodiment of the disclosure, there is the association relationship between the closed-loop power index and the TCI state. When source reference signals of the TCI state are channel state information reference signals (CSI-RSs) or synchronization signal blocks (SSBs) of different TRPs, the closed-loop power indexes associated with the TCI state are also different. Alternatively, the source reference signals of the TCI state are a sounding reference signals (SRSs), and when the SRSs are SRSs of different panels, the closed-loop power indexes associated with the TCI state are also different.

In other embodiments, the first configuration signaling is used to configure different open-loop power control parameter sets for different TRPs, and different open-loop power control parameter sets include different closed-loop power indexes.

In the embodiment of the disclosure, there is no association relationship between the closed-loop power index and the TCI state. In this case, different open-loop power control parameter sets are configured for different TRPs, and different open-loop power control parameter sets include different closed-loop power indexes, so different closed-loop power indexes may be determined according to the open-loop power control parameter sets.

In other embodiments, the TPC command includes the closed-loop power index. That is, both the TPC command and the closed-loop power index are both carried in the same signaling to indicate the closed-loop power adjustment value of the TRP. Since the closed-loop power index corresponds to the TPC command, the terminal may also determine the TRP corresponding to the TPC command.

In the scheme provided by the embodiment of the disclosure, the TRP corresponding to the TPC command may be determined through different association modes, so that the terminal may determine the closed-loop power control parameter of each TRP and determine the transmit power of each TRP, which thus ensures the accuracy of the determined closed-loop power adjustment value, thereby ensuring the reliability of transmission.

The embodiment shown in FIG. 3 illustrates that the terminal may determine the closed-loop power adjustment value. In another embodiment, the terminal may reconfigure the closed-loop power adjustment value. FIG. 6 is a flowchart of a method for reconfiguring a closed-loop power adjustment value according to an exemplary embodiment of the disclosure. For example, the method may be applied to the terminal and the network device shown in FIG. 1. The method includes at least part of the following contents.

At step 601, the network device sends a second configuration signaling to the terminal, in which the second configuration signaling is used to reconfigure an open-loop power parameter, and the second configuration signaling is used for the terminal to reconfigure the closed-loop power adjustment value.

At step 602, the terminal receives the second configuration signaling sent by the network device.

In the embodiment, the network device reconfigures the open-loop power parameter for the terminal through the second configuration signaling, and in this case, the terminal may reconfigure the closed-loop power adjustment value according to the second configuration signaling.

The open-loop power parameter includes at least one of $P_0$, $\alpha$ and $PL$, in which $P_0$ is the target received power, which is an expected received power configured by the network equipment, $\alpha$ is the partial path compensation factor, and $PL$ is the path loss.

In some embodiments, the terminal reconfigures the closed-loop power adjustment value by a default way.

Optionally, the second configuration signaling is used for the terminal to reconfigure the closed-loop power adjustment value corresponding to each TRP.

In the embodiment of the disclosure, the second configuration information does not indicate the TRP, and in this case, the terminal reconfigures the closed-loop power adjustment value corresponding to each TRP.

Optionally, the second configuration signaling is used for the terminal to reconfigure the closed-loop power adjustment value corresponding to the TRP indicated by the second configuration signaling.

In the embodiment of the disclosure, the second configuration signaling may indicate the TRP. For the terminal, the terminal may reconfigure the closed-loop power adjustment value of the TRP indicated by the second configuration signaling, while for other TRPs, there is no need to reconfigure the closed-loop power adjustment values of other TRPs.

In other embodiments, the second configuration signaling further includes indication information that indicates whether to reconfigure the closed-loop power adjustment value, and the terminal may determine whether to reconfigure the closed-loop power adjustment value through the indication information in the second configuration signaling.

Optionally, in a case where the indication information indicates to reconfigure the closed-loop power adjustment value, the second configuration signaling is used for the terminal to reconfigure the closed-loop power adjustment value corresponding to each TRP.

In the embodiment of the disclosure, the second configuration information does not indicate the TRP, and when the indication information indicates that the closed-loop power adjustment value needs to be reconfigured, the terminal will reconfigure the closed-loop power adjustment value corresponding to each TRP.

Optionally, in a case where the indication information indicates to reconfigure the closed-loop power adjustment value, the second configuration signaling is used for the terminal to reconfigure the closed-loop power adjustment value corresponding to the TRP indicated by the second configuration signaling.

In the embodiment of the disclosure, the second configuration signaling may indicate the TRP. For the terminal, when the indication information indicates to reconfigure the closed-loop power adjustment value, the terminal may reconfigure the closed-loop power adjustment value of the TRP indicated by the second configuration signaling, while for other TRPs, there is no need to reconfigure the closed-loop power adjustment values of the other TRPs.

In the scheme provided by the embodiment of the disclosure, the terminal determines whether to reconfigure the closed-loop power adjustment value of the TRP based on the open-loop power parameter configured by the network device, so that the accuracy of reconfiguring the closed-loop power adjustment value may be improved.

It should be noted that the above embodiments may be split into new embodiments or combined with other embodiments into new embodiments, and the combinations of embodiments are not limited in the disclosure.

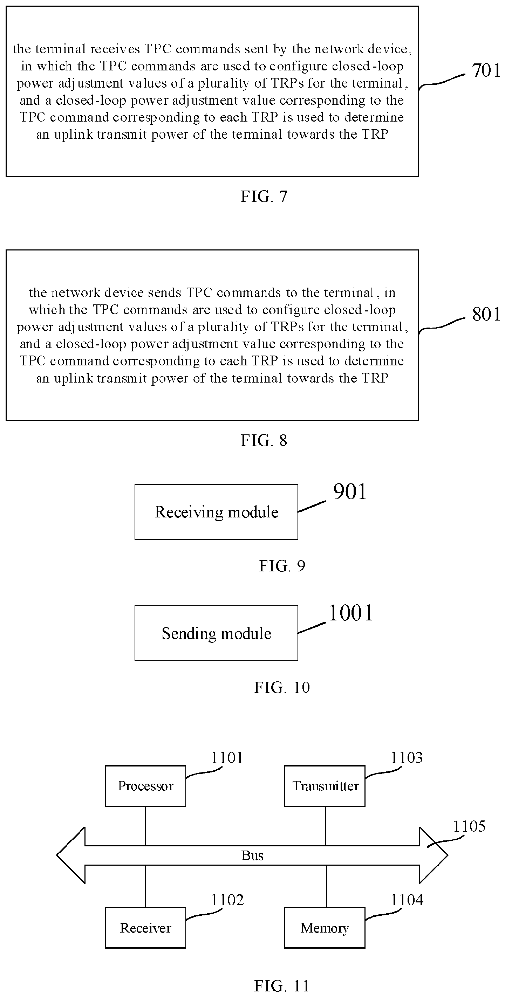

FIG. 7 is a flowchart of a method for determining a closed-loop power adjustment value according to an exemplary embodiment of the disclosure. The method may be applied to the terminal shown in FIG. 1. The method includes at least part of the following contents.

At step 701, the terminal receives TPC commands sent by a network device, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP.

In the embodiment of the disclosure, the terminal may perform uplink data transmission through the TRPs configured by the network device. For the terminal, the terminal may transmit uplink data to the network device at the same time. Moreover, for the terminal, the terminal needs to determine the closed-loop power adjustment value corresponding to each TRP, and then transmits the uplink data based on the determined uplink transmit power corresponding to each TRP.

In some embodiments, the method for determining the uplink transmit power according to the closed-loop power adjustment value may be referred to the method for determining the transmit power in the above embodiment.

The network device may configure closed-loop power adjustment values of a plurality of TRPs for the terminal through the TPC commands. After receiving the TPC commands, the terminal may determine the closed-loop power adjustment value of each TRP, and then determine the uplink transmit power from the terminal to the TRP based on the closed-loop power adjustment value corresponding to the TPC command corresponding to the TRP, so that the terminal may send the uplink data to the network device based on the uplink transmit power corresponding to each TRP.

It should be noted that the steps performed by the terminal in the embodiment of the disclosure may constitute a new independent embodiment, and the steps performed by the network device may constitute a new independent embodiment, which is not limited in the embodiment of the disclosure.

In the scheme provided by the embodiment of the disclosure, the terminal may determine the closed-loop power adjustment value corresponding to each TRP according to the TPC commands, and then dynamically adjust the transmit power based on the closed-loop power adjustment value corresponding to each TRP and the actual situation of the terminal to each TRP, so as to ensure that the terminal performs uplink transmission with a larger transmit power on the premise of reducing interference, thereby ensuring system throughput.

The embodiment shown in FIG. 7 explains that the terminal needs to determine the closed-loop power adjustment value of each TRP. How the terminal determines the closed-loop power adjustment value of each TRP according to the TPC command will be explained below.

In some embodiments, the closed-loop power adjustment value of each TRP is accumulated by the closed-loop power adjustment values indicated by the TPC commands corresponding to the TRP.

In the embodiment of the disclosure, the terminal needs to determine the closed-loop power adjustment value of each TRP, the closed-loop power adjustment value of each TRP is obtained by accumulating the closed-loop power adjustment values corresponding to the terminal at a plurality of moments. That is, the terminal needs to accumulate the closed-loop power adjustment values indicated by the TPC commands corresponding to each TRP to obtain the closed-loop power adjustment value of each TRP at the current moment.

Optionally, $f(i, l, t) = f(i - i_0, l, t) + \Sigma \delta$, where $t$ represents an identifier of the TRP, $\delta$ represents the closed-loop power adjustment value indicated by the TPC command, and i is the time and is used to represent the current moment. $f(i, l, t)$ represents the closed-loop power adjustment value of each TRP obtained by accumulation.

For example, as shown in FIG. 4, the terminal may accumulate the closed-loop power adjustment values indicated by all TPC commands, within the $\Delta t$, belonging to the same closed loop process, to obtain the accumulated closed-loop power adjustment value of each TRP.

In some embodiments, the TPC commands of the plurality of TRPs are carried in DCI, and how the terminal determines the TRPs according to the TPC commands will be described below.

In the embodiment of the disclosure, when the TPC command sent by the network device to the terminal is carried in the DCI, the terminal may determine the TRP corresponding to the TPC command according to the TPC command in the DCI, and then determine the closed-loop power adjustment value of each TRP.

Optionally, the TPC command may be carried in one or more pieces of DCI. For the terminal, the way to determine the TRP according to the one or more pieces of DCI may also be different, which will be described below.

In the first way, at least two TPC commands are carried in one piece of DCI.

In some embodiments, in a case where at least two TPC commands are carried in one piece of DCI, there are default mapping relationships between positions of TPC fields included in the DCI and the TRPs, and the TRPs are determined based on the positions of TPC fields included in the DCI and the default mapping relationships.

In the embodiment of the disclosure, the network device indicates the closed-loop power adjustment values of the plurality of TRPs for the terminal by sending one piece of DCI to the terminal. After receiving the DCI, the terminal may determine the TRPs corresponding to the TPC commands according to the DCI.

The DCI includes a plurality of TPC fields, and the default mapping relationship of the terminal includes a corresponding relationship between the TPC field and the TRP, so the terminal may determine the corresponding TRP according to the position of TPC field and the default mapping relationship.

That is, after receiving the DCI, the terminal may determine the TRP corresponding to each TPC field according to the positions of TPC fields included in the DCI and the default mapping relationships, and then determine the closed-loop power adjustment value of each TRP based on the determined closed-loop power adjustment values indicated by the TPC commands corresponding to the same TRP.

For example, the Nth TPC field in the DCI corresponds to the Nth TRP, and N is a positive integer. That is, when the DCI includes two TPC fields, the first TPC field corresponds to the first TRP, and the second TPC field corresponds to the second TRP.

Optionally, the mapping relationship between the TPC field and the TRP is actually indicated by a TCI state, in which the TCI state has a corresponding relationship with the TRP. That is, the position of TPC field included in the DCI indicates the corresponding TRP through the corresponding TCI state.

For example, the Nth TPC field corresponds to the Nth TCI state, and the Nth TCI state corresponds to the Nth TRP, that is, the Nth TPC field corresponds to the Nth TRP.

In other embodiments, in a case where at least two TPC commands are carried in one piece of DCI, the DCI includes a mapping identifier, and the mapping identifier indicates mapping relationships between positions of TPC fields and the TRPs, and the TRPs are determined based on the positions of TPC fields included in the DCI and the mapping relationships indicated by the mapping identifier.

In the embodiment of the disclosure, the network device indicates the closed-loop power adjustment values of the plurality of TRPs for the terminal by sending a piece of DCI, so that after receiving the DCI, the terminal may determine the TRPs corresponding to the TPC commands according to the DCI.

The DCI includes the mapping identifier, which is used to indicate the mapping relationships between the positions of TPC fields and the TRPs. In other words, the terminal is notified of the mapping relationships between the positions of TPC fields and the TRPs through the mapping identifier, so that the terminal may determine the corresponding TRP according to the position of the TPC field.

In some embodiments, the mapping identifier indicates a sequential mapping, in which the sequential mapping means that the Nth TPC field corresponds to the Nth TRP, and N is a positive integer. That is, when the DCI includes two TPC fields, the first TPC field corresponds to the first TRP, and the second TPC field corresponds to the second TRP.

Optionally, the mapping relationship between the TPC field and the TRP is actually indicated by a TCI state, in which the TCI state has a corresponding relationship with the TRP. That is, the position of the TPC field included in the DCI indicates the corresponding TRP through the corresponding TCI state.

For example, the Nth TPC field corresponds to the Nth TCI state, and the TCI state corresponds to the TRP. That is, the Nth TPC field corresponds to the Nth TRP.

In some embodiments, the mapping identifier indicates a cross mapping, in which the cross mapping means that the first TPC field corresponds to the second TRP, while the second TPC field corresponds to the first TRP.

Optionally, the mapping relationship between the TPC field and the TRP is actually indicated by a TCI state, in which the TCI state has a corresponding relationship with the TRP. That is, the position of the TPC field included in the DCI indicates the corresponding TRP through the corresponding TCI state.

For example, the first TPC field corresponds to the second TCI state, and the second TCI state corresponds to the second TRP. The second TPC field corresponds to the first TCI state, and the first TCI state corresponds to the first TRP.

In the second way, in a case where a plurality of TPC commands are carried in a plurality of pieces of DCI, the TRPs are determined based on an indication identifier included in each DCI. That is, one TPC command is carried in one piece of DCI.

In the embodiment of the disclosure, the indication identifier indicates the TRP, that is, each TPC command corresponds to one TRP, and the terminal determines the TRP corresponding to each DCI according to the indication identifier included in the DCI.

Optionally, the indication identifier may be a CORESETPoolIndex, or other identifiers, which is not limited by the embodiment of the disclosure.

In the scheme provided by the embodiment of the disclosure, the TPC command is carried in the DCI, and the terminal may determine the corresponding TRP according to the TPC field included in the DCI, and then determine the closed-loop power adjustment value corresponding to each TRP, which thus ensures the accuracy of the determined closed-loop power adjustment value, thereby improving the reliability of transmission.

In some embodiments, the terminal may also perform the accumulation of closed-loop power adjustment values according to a closed-loop power index associated with the TPC command.

The closed-loop power indexes associated with TPC commands of different TRPs may be different. That is, the TPC commands of each TRP are associated with the same closed-loop power index, and the terminal may determine whether it is the same TRP according to the closed-loop power index associated with the TPC command. In a case where the closed-loop power indexes associated with the TPC commands are the same, it is determined that the TPC commands correspond to the same TRP.

Optionally, the network device may configure the closed-loop power index for the TPC command of the terminal. In some embodiments, the network device sends a first configuration signaling to the terminal, in which the first configuration signaling is used to configure different closed-loop power indexes for TPC commands of different TRPs, and the terminal receives the first configuration signaling.

In the embodiment of the disclosure, the network device may configure the closed-loop power indexes of the TPC commands of different TRPs through the first configuration signaling. After receiving the first configuration signaling sent by the network device, the terminal may determine the closed-loop power index of the TPC command of each TRP. If the terminal needs to determine the closed-loop power adjustment value of each TRP, the corresponding TRP may be determined according to the closed-loop power index, and then the closed-loop power adjustment value of each TRP may be determined.

In some embodiments, the first configuration signaling is used to configure an association relationship between the closed-loop power index and the TCI state.

In the embodiment of the disclosure, there is the association relationship between the closed-loop power index and the TCI state. When source reference signals of the TCI state are channel state information reference signals (CSI-RSs) or synchronization signal blocks (SSBs) of different TRPs, the closed-loop power indexes associated with the TCI state are also different. Alternatively, the source reference signals of the TCI state are SRSs, and when the SRSs are SRSs of different panels, the closed-loop power indexes associated with the TCI state are also different.

In other embodiments, the first configuration signaling is used to configure different open-loop power control parameter sets for different TRPs, and different open-loop power control parameter sets include different closed-loop power indexes.

In the embodiment of the disclosure, there is no association relationship between the closed-loop power index and the TCI state. In this case, different open-loop power control parameter sets are configured for different TRPs, and different open-loop power control parameter sets include different closed-loop power indexes, so different closed-loop power indexes may be determined according to the open-loop power control parameter sets.

In other embodiments, the TPC command includes the closed-loop power index. That is, both the TPC command and the closed-loop power index are both carried in the same signaling to indicate the closed-loop power adjustment value of the TRP. Since the closed-loop power index corresponds to the TPC command, the terminal may also determine the TRP corresponding to the TPC command.

In the scheme provided by the embodiment of the disclosure, the TRP corresponding to the TPC command may be determined through different association modes, so that the terminal can determine the closed-loop power adjustment value of each TRP and determine the transmit power of each TRP, so as to ensure the accuracy of the determined closed-loop power adjustment value, thereby ensuring the reliability of transmission.

The embodiment shown in FIG. 6 illustrates that the terminal may determine the closed-loop power adjustment value. In another embodiment, the terminal may also reconfigure the closed-loop power adjustment value.

In some embodiments, the network device sends a second configuration signaling to the terminal, in which the second configuration signaling is used to reconfigure an open-loop power parameter, and the second configuration signaling is used for the terminal to reconfigure the closed-loop power adjustment value. The terminal receives the second configuration signaling sent by the network device.

The open-loop power parameter includes at least one of $P_0$, $\alpha$ and $PL$, in which $P_0$ is the target received power, which is an expected received power configured by the network equipment, $\alpha$ is the partial path compensation factor, and $PL$ is the path loss.

In the embodiment, the network device reconfigures the open-loop power parameter for the terminal through the second configuration signaling, and in this case, the terminal may reconfigure the closed-loop power adjustment value according to the second configuration signaling.

In some embodiments, the terminal reconfigures the closed-loop power adjustment value by a default way.

Optionally, the second configuration signaling is used for the terminal to reconfigure the closed-loop power adjustment value corresponding to each TRP.

In the embodiment of the disclosure, the second configuration information does not indicate the TRP, and in this case, the terminal reconfigures the closed-loop power adjustment value corresponding to each TRP.

Optionally, the second configuration signaling is used for the terminal to reconfigure the closed-loop power adjustment value corresponding to the TRP indicated by the second configuration signaling.

In the embodiment of the disclosure, the second configuration signaling may indicate the TRP. For the terminal, the terminal may reconfigure the closed-loop power adjustment value of the TRP indicated by the second configuration signaling, while for other TRPs, there is no need to reconfigure the closed-loop power adjustment values of other TRPs.

In other embodiments, the second configuration signaling also includes indication information that indicates whether to reconfigure the closed-loop power adjustment value, and the terminal may determine whether to reconfigure the closed-loop power adjustment value through the indication information in the second configuration signaling.

Optionally, in a case where the indication information indicates to reconfigure the closed-loop power adjustment value, the second configuration signaling is used for the terminal to reconfigure the closed-loop power adjustment value corresponding to each TRP.

In the embodiment of the disclosure, the second configuration information does not indicate the TRP, and when the indication information indicates that the closed-loop power adjustment value needs to be reconfigured, the terminal will reconfigure the closed-loop power adjustment value corresponding to each TRP.

Optionally, in a case where the indication information indicates to reconfigure the closed-loop power adjustment value, the second configuration signaling is used for the terminal to reconfigure the closed-loop power adjustment value corresponding to the TRP indicated by the second configuration signaling.

In the embodiment of the disclosure, the second configuration signaling may indicate the TRP. For the terminal, when the indication information indicates to reconfigure the closed-loop power adjustment value, the terminal may reconfigure the closed-loop power adjustment value of the TRP indicated by the second configuration signaling, while for other TRPs, there is no need to reconfigure the closed-loop power adjustment values of the other TRPs.

In the scheme provided by the embodiment of the disclosure, the terminal determines whether to reconfigure the closed-loop power adjustment value of the TRP based on the open-loop power parameter configured by the network device, so that the accuracy of reconfiguring the closed-loop power adjustment value may be improved.

FIG. 8 is a flowchart of a method for determining a closed-loop power adjustment value according to an exemplary embodiment of the disclosure. The method may be applied to the network device shown in FIG. 1. The method includes at least part of the following contents.

At step 801, the network device sends TPC commands to a terminal, in which the TPC commands are used to configure closed-loop power adjustment values of a plurality of TRPs for the terminal, and a closed-loop power adjustment value corresponding to the TPC command corresponding to each TRP is used to determine an uplink transmit power from the terminal to the TRP.

In the embodiment of the disclosure, the terminal may perform uplink data transmission through the TRPs configured by the network device. For the terminal, the terminal may transmit uplink data to the network device at the same time. Moreover, for the terminal, the terminal needs to determine the closed-loop power adjustment value corresponding to each TRP, and then transmits the uplink data based on the determined uplink transmit power corresponding to each TRP.

In some embodiments, the method for determining the uplink transmit power according to the closed-loop power adjustment value may be referred to the method for determining the transmit power in the above embodiment.

The network device may configure closed-loop power adjustment values of a plurality of TRPs for the terminal through the TPC commands. After receiving the TPC commands, the terminal may determine the closed-loop power adjustment value of each TRP, and then determine the uplink transmit power from the terminal to the TRP based on the closed-loop power adjustment value corresponding to the TPC command corresponding to the TRP, so that the terminal may send the uplink data to the network device based on the uplink transmit power corresponding to each TRP.

It should be noted that the steps performed by the terminal in the embodiment of the disclosure may constitute a new independent embodiment, and the steps performed by the network device may constitute a new independent embodiment, which is not limited in the embodiment of the disclosure.

In the scheme provided by the embodiment of the disclosure, the terminal may determine the closed-loop power adjustment value corresponding to each TRP according to the TPC commands, and then dynamically adjust the transmit power based on the closed-loop power adjustment value corresponding to each TRP and the actual situation of the terminal to each TRP, so as to ensure that the terminal performs uplink transmission with a larger transmit power on the premise of reducing interference, thereby ensuring system throughput.

The embodiment shown in FIG. 8 explains that the terminal needs to determine the closed-loop power adjustment value of each TRP. How the terminal determines the closed-loop power adjustment value of each TRP according to the TPC command will be explained below.

In some embodiments, the closed-loop power adjustment value of each TRP is accumulated by the closed-loop power adjustment values indicated by the TPC commands corresponding to the TRP.

In the embodiment of the disclosure, the terminal needs to determine the closed-loop power adjustment value of each TRP, the closed-loop power adjustment value of each TRP is obtained by accumulating the closed-loop power adjustment values corresponding to the terminal at a plurality of moments. That is, the terminal needs to accumulate the closed-loop power adjustment values indicated by the TPC commands corresponding to each TRP to obtain the closed-loop power adjustment value of each TRP at the current moment.

Optionally, $f(i, l, t) = f(i - i_0, l, t) + \Sigma \delta$, where $t$ represents an identifier of the TRP, $\delta$ represents the closed-loop power adjustment value indicated by the TPC command, and i is the time and is used to represent the current moment. $f(i, l, t)$ represents the closed-loop power adjustment value of each TRP obtained by accumulation.

For example, as shown in FIG. 4, the terminal may accumulate the closed-loop power adjustment values indicated by all TPC commands, within the $\Delta t$, belonging to the same closed loop process, to obtain the accumulated closed-loop power adjustment value of each TRP.

In some embodiments, the TPC commands of the plurality of TRPs are carried in DCI, and how the terminal determines the TRPs according to the TPC commands will be described below.

In the embodiment of the disclosure, when the TPC command sent by the network device to the terminal is carried in the DCI, the terminal may determine the TRP corresponding to the TPC command according to the TPC command in the DCI, and then determine the closed-loop power adjustment value of each TRP.

Optionally, the TPC command may be carried in one or more pieces of DCI. For the terminal, the way to determine the TRP according to the one or more pieces of DCI may also be different, which will be described below.

In the first way, at least two TPC commands are carried in one piece of DCI.

In some embodiments, in a case where at least two TPC commands are carried in one piece of DCI, there are default mapping relationships between positions of TPC fields included in the DCI and the TRPs, and the TRPs are determined based on the positions of TPC fields included in the DCI and the default mapping relationships.

In the embodiment of the disclosure, the network device indicates the closed-loop power adjustment values of the plurality of TRPs for the terminal by sending one piece of DCI to the terminal. After receiving the DCI, the terminal may determine the TRPs corresponding to the TPC commands according to the DCI.

The DCI includes a plurality of TPC fields, and the default mapping relationship of the terminal includes a corresponding relationship between the TPC field and the TRP, so the terminal may determine the corresponding TRP according to the position of TPC field and the default mapping relationship.

That is, after receiving the DCI, the terminal may determine the TRP corresponding to each TPC field according to the positions of TPC fields included in the DCI and the default mapping relationships, and then determine the closed-loop power adjustment value of each TRP based on the determined closed-loop power adjustment values indicated by the TPC commands corresponding to the same TRP.

For example, the Nth TPC field in the DCI corresponds to the Nth TRP, and N is a positive integer. That is, when the DCI includes two TPC fields, the first TPC field corresponds to the first TRP, and the second TPC field corresponds to the second TRP.

Optionally, the mapping relationship between the TPC field and the TRP is actually indicated by a TCI state, in which the TCI state has a corresponding relationship with the TRP. That is, the position of TPC field included in the DCI indicates the corresponding TRP through the corresponding TCI state.

For example, the Nth TPC field corresponds to the Nth TCI state, and the Nth TCI state corresponds to the Nth TRP, that is, the Nth TPC field corresponds to the Nth TRP.

In other embodiments, in a case where at least two TPC commands are carried in one piece of DCI, the DCI includes a mapping identifier, and the mapping identifier indicates mapping relationships between positions of TPC fields and the TRPs, and the TRPs are determined based on the positions of TPC fields included in the DCI and the mapping relationships indicated by the mapping identifier.

In the embodiment of the disclosure, the network device indicates the closed-loop power adjustment values of the plurality of TRPs for the terminal by sending a piece of DCI, so that after receiving the DCI, the terminal may determine the TRPs corresponding to the TPC commands according to the DCI.

The DCI includes the mapping identifier, which is used to indicate the mapping relationships between the positions of TPC fields and the TRPs. In other words, the terminal is notified of the mapping relationships between the positions of TPC fields and the TRPs through the mapping identifier, so that the terminal may determine the corresponding TRP according to the position of the TPC field.

In some embodiments, the mapping identifier indicates a sequential mapping, in which the sequential mapping means that the Nth TPC field corresponds to the Nth TRP, and N is a positive integer. That is, when the DCI includes two TPC fields, the first TPC field corresponds to the first TRP, and the second TPC field corresponds to the second TRP.

Optionally, the mapping relationship between the TPC field and the TRP is actually indicated by a TCI state, in which the TCI state has a corresponding relationship with the TRP. That is, the position of the TPC field included in the DCI indicates the corresponding TRP through the corresponding TCI state.

For example, the Nth TPC field corresponds to the Nth TCI state, and the TCI state corresponds to the TRP. That is, the Nth TPC field corresponds to the Nth TRP.

In some embodiments, the mapping identifier indicates a cross mapping, in which the cross mapping means that the first TPC field corresponds to the second TRP, while the second TPC field corresponds to the first TRP.

Optionally, the mapping relationship between the TPC field and the TRP is actually indicated by a TCI state, in which the TCI state has a corresponding relationship with the TRP. That is, the position of the TPC field included in the DCI indicates the corresponding TRP through the corresponding TCI state.

For example, the first TPC field corresponds to the second TCI state, and the second TCI state corresponds to the second TRP. The second TPC field corresponds to the first TCI state, and the first TCI state corresponds to the first TRP.

In the second way, in a case where a plurality of TPC commands are carried in a plurality of pieces of DCI, the TRPs are determined based on an indication identifier included in each DCI. That is, one TPC command is carried in one piece of DCI.

In the embodiment of the disclosure, the indication identifier indicates the TRP, that is, each TPC command corresponds to one TRP, and the terminal determines the TRP corresponding to each DCI according to the indication identifier included in the DCI.

Optionally, the indication identifier may be a CORESETPoolIndex, or other identifiers, which is not limited by the embodiment of the disclosure.

In the scheme provided by the embodiment of the disclosure, the TPC command is carried in the DCI, and the terminal may determine the corresponding TRP according to the TPC field included in the DCI, and then determine the closed-loop power adjustment value corresponding to each TRP, which thus ensures the accuracy of the determined closed-loop power adjustment value, thereby improving the reliability of transmission.

In some embodiments, the terminal may also perform the accumulation of closed-loop power adjustment values according to a closed-loop power index associated with the TPC command.

The closed-loop power indexes associated with TPC commands of different TRPs may be different. That is, the TPC commands of each TRP are associated with the same closed-loop power index, and the terminal may determine whether it is the same TRP according to the closed-loop power index associated with the TPC command. In a case where the closed-loop power indexes associated with the TPC commands are the same, it is determined that the TPC commands correspond to the same TRP.

Optionally, the network device may configure the closed-loop power index for the TPC command of the terminal.

The network device sends a first configuration signaling to the terminal, in which the first configuration signaling is used to configure different closed-loop power indexes for TPC commands of different TRPs.

In the embodiment of the disclosure, the network device may configure the closed-loop power indexes of the TPC commands of different TRPs through the first configuration signaling. After receiving the first configuration signaling sent by the network device, the terminal may determine the closed-loop power index of the TPC command of each TRP. If the terminal needs to determine the closed-loop power adjustment value of each TRP, the corresponding TRP may be determined according to the closed-loop power index, and then the closed-loop power adjustment value of each TRP may be determined.

In some embodiments, the first configuration signaling is used to configure an association relationship between the closed-loop power index and the TCI state.

In the embodiment of the disclosure, there is the association relationship between the closed-loop power index and the TCI state. When source reference signals of the TCI state are channel state information reference signals (CSI-RSs) or synchronization signal blocks (SSBs) of different TRPs, the closed-loop power indexes associated with the TCI state are also different. Alternatively, the source reference signals of the TCI state are SRSs, and when the SRSs are SRSs of different panels, the closed-loop power indexes associated with the TCI state are also different.

In other embodiments, the first configuration signaling is used to configure different open-loop power control parameter sets for different TRPs, and different open-loop power control parameter sets include different closed-loop power indexes.

In the embodiment of the disclosure, there is no association relationship between the closed-loop power index and the TCI state. In this case, different open-loop power control parameter sets are configured for different TRPs, and different open-loop power control parameter sets include different closed-loop power indexes, so different closed-loop power indexes may be determined according to the open-loop power control parameter sets.

In other embodiments, the TPC command includes the closed-loop power index. That is, both the TPC command and the closed-loop power index are both carried in the same signaling to indicate the closed-loop power adjustment value of the TRP. Since the closed-loop power index corresponds to the TPC command, the terminal may also determine the TRP corresponding to the TPC command.

In the scheme provided by the embodiment of the disclosure, the TRP corresponding to the TPC command may be determined through different association modes, so that the terminal can determine the closed-loop power adjustment value of each TRP and determine the transmit power of each TRP, so as to ensure the accuracy of the determined closed-loop power adjustment value, thereby ensuring the reliability of transmission.

The embodiment shown in FIG. 8 illustrates that the terminal may determine the closed-loop power adjustment value. In another embodiment, the terminal may also reconfigure the closed-loop power adjustment value.

In some embodiments, the network device sends a second configuration signaling to the terminal, in which the second configuration signaling is used to reconfigure an open-loop power parameter, and the second configuration signaling is used for the terminal to reconfigure the closed-loop power adjustment value.

The open-loop power parameter includes at least one of $P_0$, $\alpha$ and $PL$, in which $P_0$ is the target received power, which is an expected received power configured by the network equipment, $\alpha$ is the partial path compensation factor, and $PL$ is the path loss.

In the embodiment, the network device reconfigures the open-loop power parameters for the terminal through the second configuration signaling, and in this case, the terminal may reconfigure the closed-loop power adjustment value according to the second configuration signaling.

In some embodiments, the terminal reconfigures the closed-loop power adjustment value by a default way.

Optionally, the second configuration signaling is used for the terminal to reconfigure the closed-loop power adjustment value corresponding to each TRP.

In the embodiment of the disclosure, the second configuration information does not indicate the TRP, and in this case, the terminal reconfigures the closed-loop power adjustment value corresponding to each TRP.

Optionally, the second configuration signaling is used for the terminal to reconfigure the closed-loop power adjustment value corresponding to the TRP indicated by the second configuration signaling.

In the embodiment of the disclosure, the second configuration signaling may indicate the TRP. For the terminal, the terminal may reconfigure the closed-loop power adjustment value of the TRP indicated by the second configuration signaling, while for other TRPs, there is no need to reconfigure the closed-loop power adjustment values of other TRPs.

In other embodiments, the second configuration signaling also includes indication information that indicates whether to reconfigure the closed-loop power adjustment value, and the terminal may determine whether to reconfigure the closed-loop power adjustment value through the indication information in the second configuration signaling.

Optionally, in a case where the indication information indicates to reconfigure the closed-loop power adjustment value, the second configuration signaling is used for the terminal to reconfigure the closed-loop power adjustment value corresponding to each TRP.

In the embodiment of the disclosure, the second configuration information does not indicate the TRP, and when the indication information indicates that the closed-loop power adjustment value needs to be reconfigured, the terminal will reconfigure the closed-loop power adjustment value corresponding to each TRP.

Optionally, in a case where the indication information indicates to reconfigure the closed-loop power adjustment value, the second configuration signaling is used for the terminal to reconfigure the closed-loop power adjustment value corresponding to the TRP indicated by the second configuration signaling.

In the embodiment of the disclosure, the second configuration signaling may indicate the TRP. For the terminal, when the indication information indicates to reconfigure the closed-loop power adjustment value, the terminal may reconfigure the closed-loop power adjustment value of the TRP indicated by the second configuration signaling, while for other TRPs, there is no need to reconfigure the closed-loop power adjustment values of the other TRPs.

In the scheme provided by the embodiment of the disclosure, the terminal determines whether to reconfigure the closed-loop power adjustment value of the TRP based on the open-loop power parameter configured by the network device, so that the accuracy of reconfiguring the closed-loop power adjustment value may be improved.

FIG. 9 is a block diagram of an apparatus for determining a closed-loop power adjustment value according to an exemplary embodiment of the disclosure. As illustrated in FIG. 9, the apparatus includes:

a receiving module 901, configured to receive TPC commands sent by a network device, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP.

In some embodiments, the closed-loop power adjustment value of each TRP is accumulated by the closed-loop power adjustment values indicated by the TPC commands corresponding to the TRP.

In some embodiments, the TPC commands of the plurality of TRPs are carried in DCI.

In some embodiments, in a case where at least two of the TPC commands are carried in one piece of DCI, there is a default mapping relationship between positions of TPC fields included in the DCI and the TRPs, and the TRPs are determined based on the positions of TPC fields included in the DCI and the default mapping relationships;

or,

in a case where at least two of the TPC commands are carried in one piece of DCI, the DCI includes a mapping identifier, the mapping identifier indicates mapping relationships between positions of TPC fields and the TRPs, and the TRPs are determined based on the positions of TPC fields included in the DCI and the mapping relationships indicated by the mapping identifier.

In some embodiments, in a case where a plurality of the TPC commands are carried in a plurality of pieces of DCI, the TRPs are determined based on an indication identifier included in each DCI.

In some embodiments, closed-loop power indexes associated with TPC commands of different TRPs are different.

In some embodiments, the receiving module 901 is configured to receive a first configuration signaling, in which the first configuration signaling is used to configure different closed-loop power indexes for TPC commands of different TRPs.

In some embodiments, the first configuration signaling is used to configure an association relationship between the closed-loop power index and a TCI state or an SRS resource index.

In some embodiments, the first configuration signaling is used to configure different open-loop power control parameter sets for different TRPs, and different open-loop power control parameter sets include different closed-loop power indexes.

In some embodiments, the closed-loop power index is associated with an SRS resource set.

In some embodiments, the TPC command includes the closed-loop power index.

In some embodiments, the receiving module 901 is configured to: receive a second configuration signaling sent by the network device, in which the second configuration signaling is used to reconfigure an open-loop power parameter;

in which the second configuration signaling is used for the terminal to reconfigure the closed-loop power adjustment value.

In some embodiments, the second configuration signaling is used for the terminal to reconfigure the closed-loop power adjustment value corresponding to each TRP;

or,

the second configuration signaling is used for the terminal to reconfigure the closed-loop power adjustment value corresponding to the TRP indicated by the second configuration signaling.

In some embodiments, the second configuration signaling further includes indication information that indicates whether to reconfigure the closed-loop power adjustment value;

in a case where the indication information indicates to reconfigure the closed-loop power adjustment value, the second configuration signaling is used for the terminal to reconfigure the closed-loop power regulation value corresponding to each TRP;

or,

in a case where the indication information indicates to reconfigure the closed-loop power adjustment value, the second configuration signaling is used for the terminal to reconfigure the closed-loop power adjustment value corresponding to the TRP indicated by the second configuration signaling.

It should be noted that the apparatus provided in the above embodiments only divides the above-mentioned functional modules for examples when realizing its functions. In practical application, the above-mentioned functions are allocated to different functional modules to complete as required. That is, the internal structure of the apparatus is divided into different functional modules to complete all or part of the above-mentioned functions. In addition, the apparatus provided in the above embodiments belongs to the same concept as the method embodiments, and the specific implementation process may be found in the method embodiments, which will not be repeated here.

FIG. 10 is a block diagram of an apparatus for determining a closed-loop power adjustment value according to an exemplary embodiment of the disclosure. As illustrated in FIG. 10, the apparatus includes:

a sending module 1001, configured to send TPC commands to a terminal, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP.

In some embodiments, the closed-loop power adjustment value of each TRP is accumulated by the closed-loop power adjustment values indicated by the TPC commands corresponding to the TRP.

In some embodiments, the TPC commands of the plurality of TRPs are carried in DCI.

In some embodiments, in a case where at least two of the TPC commands are carried in one piece of DCI, there is default mapping relationships between positions of TPC fields includes in the DCI and the TRPs, and the TRPs are determined based on the positions of TPC fields includes in the DCI and the default mapping relationships;

or,

in a case where at least two of the TPC commands are carried in one piece of DCI, the DCI includes a mapping identifier, the mapping identifier indicates mapping relationships between positions of TPC fields and the TRPs, and the TRPs are determined based on the positions of TPC fields includes in the DCI and the mapping relationships indicated by the mapping identifier.

In some embodiments, in a case where a plurality of the TPC commands are carried in a plurality of pieces of DCI, the TRPs are determined based on an indication identifier included in each DCI.

In some embodiments, closed-loop power indexes associated with TPC commands of different TRPs are different.

In some embodiments, the sending module 1001 is configured to send a first configuration signaling, in which the first configuration signaling is used to configure different closed-loop power indexes for TPC commands of different TRPs.

In some embodiments, the first configuration signaling is used to configure an association relationship between the closed-loop power index and a TCI state or an SRS resource index.

In some embodiments, the first configuration signaling is used to configure different open-loop power control parameter sets for different TRPs, and different open-loop power control parameter sets include different closed-loop power indexes.

In some embodiments, the closed-loop power index is associated with an SRS resource set.

In some embodiments, the TPC command includes the closed-loop power index.

In some embodiments, the sending module 1001 is configured to: send a second configuration signaling to the terminal, in which the second configuration signaling is used to reconfigure an open-loop power parameter; and

in which the second configuration signaling is used for the terminal to reconfigure the closed-loop power adjustment value.

In some embodiments, the second configuration signaling is used for the terminal to reconfigure the closed-loop power adjustment value corresponding to each TRP;

or,

the second configuration signaling is used for the terminal to reconfigure the closed-loop power adjustment value corresponding to the TRP indicated by the second configuration signaling.

In some embodiments, the second configuration signaling further includes indication information that indicates whether to reconfigure the closed-loop power adjustment value;

in a case where the indication information indicates to reconfigure the closed-loop power adjustment value, the second configuration signaling is used for the terminal to reconfigure the closed-loop power regulation value corresponding to each TRP;

or,

in a case where the indication information indicates to reconfigure the closed-loop power adjustment value, the second configuration signaling is used for the terminal to reconfigure the closed-loop power adjustment value corresponding to the TRP indicated by the second configuration signaling.

It should be noted that the apparatus provided in the above embodiments only divides the above-mentioned functional modules for examples when realizing its functions. In practical application, the above-mentioned functions are allocated to different functional modules to complete as required. That is, the internal structure of the apparatus is divided into different functional modules to complete all or part of the above-mentioned functions. In addition, the apparatus provided in the above embodiments belongs to the same concept as the method embodiments, and the specific implementation process may be found in the method embodiments, which will not be repeated here.

FIG. 11 is a schematic diagram of a communication device according to an exemplary embodiment of the disclosure. The communication device includes: a processor 1101, a receiver 1102, a transmitter 1103, a memory 1104 and a bus 1105.

The processor 1101 includes one or more processing cores, and the processor 1101 executes various functional applications and performs information processing by running software programs and modules.

The receiver 1102 and the transmitter 1103 may be realized as a communication component, in which the communication component may be a communication chip.

The memory 1104 is connected to the processor 1101 through the bus 1105.

The memory 1104 may be configured to store at least one program code, and the processor 1101 is configured to execute the at least one program code to realize the steps in the above method embodiments.

In addition, the communication device may be a terminal or a network device. The memory 1104 may be realized by any type of volatile or nonvolatile memory devices, or a combination thereof. The volatile or nonvolatile memory device includes, but is not limited to, a magnetic or optical disk, an Electrically-Erasable Programmable Read Only Memory (EEPROM), an Erasable Programmable Read Only Memory (EPROM), a Static Random-Access Memory (SRAM), a Read Only Memory (ROM), a magnetic memory, a flash memory, and a Programmable Read-Only Memory (PROM).

In an exemplary embodiment, a computer-readable storage medium is also provided. The readable storage medium stores an executable program code, which is loaded and executed by a processor to realize the method for determining the closed-loop power adjustment value executed by the communication device and provided by the above method embodiments.

In an exemplary embodiment, a chip is provided. The chip includes a programmable logic circuit and/or program instruction. When the chip is running on a terminal or a network device, the chip is configured to realize the method for determining the closed-loop power adjustment value provided by the above method embodiments.

In an exemplary embodiment, a communication system is provided. The communication system includes a terminal and a network device. The terminal is configured to implement the method for determining the closed-loop power adjustment value as described above, and the network device is configured to implement the method for determining the closed-loop power adjustment value as described above.

In an exemplary embodiment, a computer program product is provided. When the computer program product is executed by a processor of a terminal or a network device, the computer program product is configure to implement the method for determining the closed-loop power adjustment value provided by the above method embodiments.

Those skilled in the art understand that all or part of the steps in the above-mentioned embodiments may be completed by hardware, or by instructing related hardware to complete by a program, which may be stored in a computer-readable storage medium. The above-mentioned storage medium may be a ROM, a magnetic or optical disk, etc.

Only optional embodiments of the disclosure are described above, which are not used to limit the disclosure. Any modification, equivalent substitution, improvement, etc. made within the spirit and principle of the disclosure should be included in the protection scope of the disclosure.

**Claims**

1. A method for determining a closed-loop power adjustment value, performed by a terminal, comprising: receiving transmit power control (TPC) commands sent by a network device, wherein the TPC commands are used to configure closed-loop power adjustment values of a plurality of transmission reception points (TRPs) for the terminal, and a closed-loop power adjustment value corresponding to the TPC command corresponding to each TRP is used to determine an uplink transmit power of the terminal towards the TRP.

2. The method of claim 1, wherein the closed-loop power adjustment value of each TRP is accumulated by the closed-loop power adjustment values indicated by the TPC commands corresponding to the TRP.

3. The method of claim 2, wherein the TPC commands of the plurality of TRPs are carried in downlink control information (DCI).

4. The method of claim 3, wherein in a case where at least two of the TPC commands are carried in one piece of DCI, there are default mapping relationships between positions of TPC fields comprised in the DCI and the TRPs, and the TRPs are determined based on the positions of TPC fields comprised in the DCI and the default mapping relationships;
or,
in a case where at least two of the TPC commands are carried in one piece of DCI, the DCI comprises a mapping identifier, the mapping identifier indicates mapping relationships between positions of TPC fields and the TRPs, and the TRPs are determined based on the positions of TPC fields comprised in the DCI and the mapping relationships indicated by the mapping identifier.

5. The method of claim 3, wherein in a case where a plurality of the TPC commands are carried in a plurality of pieces of DCI, the TRPs are determined based on an indication identifier comprised in each DCI.

6. The method of claim 2, wherein closed-loop power indexes associated with TPC commands of different TRPs are different.

7. The method of claim 6, further comprising: receiving a first configuration signaling, wherein the first configuration signaling is used to configure different closed-loop power indexes for TPC commands of different TRPs.

8. The method of claim 7, wherein the first configuration signaling is used to configure an association relationship between the closed-loop power index and a TCI state or a sounding reference signal (SRS) resource index.

9. The method of claim 7, wherein the first configuration signaling is used to configure different open-loop power control parameter sets for different TRPs, and different open-loop power control parameter sets comprise different closed-loop power indexes.

10. The method of claim 6, wherein the TPC command comprises the closed-loop power index.

11. The method of any one of claims 1-10, further comprising:
receiving a second configuration signaling sent by the network device, wherein the second configuration signaling is used to reconfigure an open-loop power parameter, and the second configuration signaling is used for the terminal to reconfigure the closed-loop power adjustment value.

12. The method of claim 11, wherein the second configuration signaling is used for the terminal to reconfigure the closed-loop power adjustment value corresponding to each TRP;
or,
wherein the second configuration signaling is used for the terminal to reconfigure the closed-loop power adjustment value corresponding to the TRP indicated by the second configuration signaling.

13. The method of claim 11, wherein the second configuration signaling further comprises indication information that indicates whether to reconfigure the closed-loop power adjustment value;

in a case where the indication information indicates to reconfigure the closed-loop power adjustment value, the second configuration signaling is used for the terminal to reconfigure the closed-loop power regulation value corresponding to each TRP;
or,
in a case where the indication information indicates to reconfigure the closed-loop power adjustment value, the second configuration signaling is used for the terminal to reconfigure the closed-loop power adjustment value corresponding to the TRP indicated by the second configuration signaling.

14. A method for determining a closed-loop power adjustment value, performed by a network device, comprising:
sending transmit power control (TPC) commands to a terminal, wherein the TPC commands are used to configure closed-loop power adjustment values of a plurality of transmission reception points (TRPs) for the terminal, and a closed-loop power adjustment value corresponding to the TPC command corresponding to each TRP is used to determine an uplink transmit power of the terminal towards the TRP.

15. The method of claim 14, wherein the closed-loop power adjustment value of each TRP is accumulated by the closed-loop power adjustment values indicated by the TPC commands corresponding to the TRP.

16. The method of claim 15, wherein the TPC commands of the plurality of TRPs are carried in downlink control information (DCI).

17. The method of claim 16, wherein in a case where at least two of the TPC commands are carried in one piece of DCI, there is default mapping relationships between positions of TPC fields comprised in the DCI and the TRPs, and the TRPs are determined based on the positions of TPC fields comprised in the DCI and the default mapping relationships;
or,
in a case where at least two of the TPC commands are carried in one piece of DCI, the DCI comprises a mapping identifier, the mapping identifier indicates mapping relationships between positions of TPC fields and the TRPs, and the TRPs are determined based on the positions of TPC fields comprised in the DCI and the mapping relationships indicated by the mapping identifier.

18. The method of claim 16, wherein in a case where a plurality of the TPC commands are carried in a plurality of pieces of DCI, the TRPs are determined based on an indication identifier comprised in each DCI.

19. The method of claim 15, wherein closed-loop power indexes associated with TPC commands of different TRPs are different.

20. The method of claim 19, further comprising:
sending a first configuration signaling, wherein the first configuration signaling is used to configure different closed-loop power indexes for TPC commands of different TRPs.

21. The method of claim 20, wherein the first configuration signaling is used to configure an association relationship between the closed-loop power index and a TCI state or a sounding reference signal (SRS) resource index.

22. The method of claim 20, wherein the first configuration signaling is used to configure different open-loop power control parameter sets for different TRPs, and different open-loop power control parameter sets comprise different closed-loop power indexes.

23. The method of claim 19, wherein the TPC command comprises the closed-loop power index.

24. The method of any one of claims 14-23, further comprising:
sending a second configuration signaling to the terminal, wherein the second configuration signaling is used to reconfigure an open-loop power parameter, and the second configuration signaling is used for the terminal to reconfigure the closed-loop power adjustment value.

25. The method of claim 24, wherein the second configuration signaling is used for the terminal to reconfigure the closed-loop power adjustment value corresponding to each TRP;
or,
wherein the second configuration signaling is used for the terminal to reconfigure the closed-loop power adjustment value corresponding to the TRP indicated by the second configuration signaling.

26. The method of claim 24, wherein the second configuration signaling further comprises indication information that indicates whether to reconfigure the closed-loop power adjustment value;

in a case where the indication information indicates to reconfigure the closed-loop power adjustment value, the second configuration signaling is used for the terminal to reconfigure the closed-loop power regulation value corresponding to each TRP;
or,
in a case where the indication information indicates to reconfigure the closed-loop power adjustment value, the second configuration signaling is used for the terminal to reconfigure the closed-loop power adjustment value corresponding to the TRP indicated by the second configuration signaling.

27. An apparatus for determining a closed-loop power adjustment value, comprising:
a receiving module, configured to receive transmit power control (TPC) commands sent by a network device, wherein the TPC commands are used to configure closed-loop power adjustment values of a plurality of transmission reception points (TRPs) for the terminal, and a closed-loop power adjustment value corresponding to the TPC command corresponding to each TRP is used to determine an uplink transmit power of the terminal towards the TRP.

28. An apparatus for determining a closed-loop power adjustment value, comprising:
a sending module, configured to send transmit power control (TPC) commands to a terminal, wherein the TPC commands are used to configure closed-loop power adjustment values of a plurality of transmission reception points (TRPs) for the terminal, and a closed-loop power adjustment value corresponding to the TPC command corresponding to each TRP is used to determine an uplink transmit power of the terminal towards the TRP.

29. A terminal, comprising:

a processor; and
a transceiver connected to the processor;
wherein the processor is configured to load and execute executable instructions to realize the method for determining the closed-loop power adjustment value according to any one of claims 1-13.

30. A network device, comprising:

a processor; and
a transceiver connected to the processor;
wherein the processor is configured to load and execute executable instructions to realize the method for determining the closed-loop power adjustment value according to any one of claims 14-26.

31. A communication system, comprising a terminal and a network device, wherein the terminal is configured to realize the method for determining the closed-loop power adjustment value according to any one of claims 1-13 and the network device is configured to realize the method for determining the closed-loop power adjustment value according to any one of claims 14-26.

32. A computer-readable storage medium, wherein the readable storage medium stores executable program codes, and the executable program codes are loaded and executed by a processor to realize the method for determining the closed-loop power adjustment value according to any one of claims 1-26.

FIG. 1

FIG. 2

step 301, the network device sends TPC commands to the terminal, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP

step 302, the terminal receives the TPC commands sent by the network device

FIG. 3

FIG. 4

step 501, the network device sends a first configuration signaling to the terminal, in which the first configuration signaling is used to configure different closed-loop power indexes for TPC commands of different TRPs

step 502, the terminal receives the first configuration signaling

FIG. 5

step 601, the network device sends a second configuration signaling to the terminal, in which the second configuration signaling is used to reconfigure an open-loop power parameter, and the second configuration signaling is used for the terminal to reconfigure the closed-loop power adjustment value

step 602, the terminal receives the second configuration signaling sent by the network device

FIG. 6

the terminal receives TPC commands sent by the network device, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP

701

FIG. 7

the network device sends TPC commands to the terminal, in which the TPC commands are used to configure closed-loop power adjustment values of a plurality of TRPs for the terminal, and a closed-loop power adjustment value corresponding to the TPC command corresponding to each TRP is used to determine an uplink transmit power of the terminal towards the TRP

801

FIG. 8

Receiving module

901

FIG. 9

Sending module

1001

FIG. 10

Processor 1101    Transmitter 1103

Bus 1105

Receiver 1102    Memory 1104

FIG. 11

## INTERNATIONAL SEARCH REPORT

| International application No. |
|---|
| **PCT/CN2022/116318** |

| A. | CLASSIFICATION OF SUBJECT MATTER |
|---|---|

H04W52/08(2009.01)i;H04W52/58(2009.01)i;H04L27/00(2006.01)i

According to International Patent Classification (IPC) or to both national classification and IPC

| B. | FIELDS SEARCHED |
|---|---|

Minimum documentation searched (classification system followed by classification symbols)

IPC: H04W52/-, H04L27/-

Documentation searched other than minimum documentation to the extent that such documents are included in the fields searched

Electronic data base consulted during the international search (name of data base and, where practicable, search terms used)

CNABS, CNTXT, CNKI: 传输, 接收, 点, TRP, 发射, 功率, 控制, TPC, 下行控制, 指示, 信息, DCI, 索引, 重配, 重置. VEN, ENTXT, 3gpp, IEEE: transmi+, recept+, point, TRP, multi+, power, control, TPC, downlink control, ind+, info+, DCI, index, indices, reset, reconfig+.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021260658 A1 (TELEFONAKTIEBOLAGET LM ERICSSON) 30 December 2021 (2021-12-30)<br>description, paragraphs [0130]-[0172], and figures 13-14 and 23-27 | 1-32 |
| X | CN 114258120 A (RESEARCH INSTITUTE OF CHINA MOBILE COMMUNICATIONS CORP. et al.) 29 March 2022 (2022-03-29)<br>description, paragraphs [0094]-[0160], and figures 3-4 | 1-32 |
| X | ZTE. "Multi-TRP enhancements for PDCCH, PUCCH and PUSCH"<br>*3GPP TSG RAN WG1 Meeting #106-e R1-2106542*, 07 August 2021 (2021-08-07),<br>text, sections 2.2.1 and 2.3.1 | 1-32 |
| X | NOKIA et al. "Summary #2 of Multi-TRP PUCCH and PUSCH Enhancements"<br>*3GPP TSG RAN WG1 #106-e R1-2108299*, 24 August 2021 (2021-08-24),<br>text, pages 1-8 | 1-32 |
| A | CN 110710281 A (LG ELECTRONICS INC.) 17 January 2020 (2020-01-17)<br>entire document | 1-32 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 April 2023** | **08 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/116318**

| Patent document cited in search report | | | Publication date (day/month/year) | Patent family member(s) | | | Publication date (day/month/year) |
|---|---|---|---|---|---|---|---|
| WO | 2021260658 | A1 | 30 December 2021 | CO | 2022018803 | A2 | 30 December 2022 |
| CN | 114258120 | A | 29 March 2022 | None | | | |
| CN | 110710281 | A | 17 January 2020 | US | 2022191065 | A1 | 16 June 2022 |
| | | | | RU | 2019139249 | A | 04 June 2021 |
| | | | | RU | 2019139249 | A3 | 02 August 2021 |
| | | | | RU | 2762242 | C2 | 16 December 2021 |
| | | | | JP | 2020510383 | A | 02 April 2020 |
| | | | | JP | 6968914 | B2 | 17 November 2021 |
| | | | | WO | 2018203728 | A1 | 08 November 2018 |
| | | | | KR | 20210049960 | A | 06 May 2021 |
| | | | | KR | 102453541 | B1 | 11 October 2022 |
| | | | | SG | 11201903386 | WA | 30 May 2019 |
| | | | | JP | 2022009455 | A | 14 January 2022 |
| | | | | AU | 2018263238 | A1 | 16 May 2019 |
| | | | | AU | 2018263238 | B2 | 28 January 2021 |
| | | | | US | 2019190747 | A1 | 20 June 2019 |
| | | | | US | 10708088 | B2 | 07 July 2020 |
| | | | | US | 2020287753 | A1 | 10 September 2020 |
| | | | | US | 11336488 | B2 | 17 May 2022 |
| | | | | KR | 20190039398 | A | 11 April 2019 |
| | | | | KR | 102247028 | B1 | 29 April 2021 |
| | | | | US | 2019372806 | A1 | 05 December 2019 |
| | | | | US | 11063788 | B2 | 13 July 2021 |
| | | | | BR | 112019015603 | A2 | 17 March 2020 |
| | | | | EP | 3481113 | A1 | 08 May 2019 |
| | | | | EP | 3481113 | A4 | 04 March 2020 |
| | | | | EP | 3481113 | B1 | 13 October 2021 |
| | | | | EP | 3930389 | A1 | 29 December 2021 |
| | | | | US | 2019199554 | A1 | 27 June 2019 |
| | | | | US | 10439847 | B2 | 08 October 2019 |
| | | | | IN | 201927022539 | A | 10 January 2020 |
| | | | | VN | 68515 | A | 25 February 2020 |
| | | | | CN | 110710281 | B | 14 June 2022 |

Form PCT/ISA/210 (patent family annex) (July 2022)